(19) Europäisches Patentamt
European Patent Office
Office européen des brevets

(11) **EP 2 306 349 A1**

(12) **EUROPÄISCHE PATENTANMELDUNG**

(43) Veröffentlichungstag:
**06.04.2011 Patentblatt 2011/14**

(51) Int Cl.:
*G06F 17/50* (2006.01)   *G06F 9/48* (2006.01)
*G06F 11/36* (2006.01)

(21) Anmeldenummer: **10196021.9**

(22) Anmeldetag: **28.06.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **03.07.2006 DE 102006031013**

(62) Dokumentnummer(n) der früheren Anmeldung(en) nach Art. 76 EPÜ:
**07785867.8 / 2 044 541**

(71) Anmelder: **Inchron GmbH**
**14482 Potsdam (DE)**

(72) Erfinder:
• **Albers, Karsten**
**82362, Weilheim (DE)**

• **Bodmann, Frank**
**26122, Oldenburg (DE)**
• **Slomka, Frank**
**89134, Blaustein (DE)**

(74) Vertreter: **Gassner, Wolfgang et al**
**Dr. Gassner & Partner**
**Patentanwälte**
**Marie-Curie-Strasse 1**
**91052 Erlangen (DE)**

Bemerkungen:
Diese Anmeldung ist am 20-12-2010 als Teilanmeldung zu der unter INID-Code 62 erwähnten Anmeldung eingereicht worden.

(54) **Verfahren zur Prüfung der Echtzeitfähigkeit eines Systems**

(57) Die Erfindung betrifft ein Verfahren zur Analyse, insbesondere Echtzeitanalyse, eines Systems, insbesondere eines Computersystems, bei dem eine Menge unterschiedlicher Tasks ($\tau$) vorgesehen ist, wobei die Tasks ($\tau_n$) zumindest teilweise wiederholend vom System angefordert und abgearbeitet werden oder wiederholt Anforderungen an Teilkomponenten des Systeme erzeugen (Ereignisse), wobei das Auftrittsmuster der die Tasks anfordernden oder von der Task erzeugten Ereignisse während der Analyse zumindest teilweise durch eine Beschreibung repräsentiert werden, welche aus einer Menge von Elemente besteht, diese jeweils das Auftrittsmuster von Ereignissen beschreiben, dadurch gekennzeichnet das bei mindestens zwei Elementen zur Beschreibung des von ihnen repräsentierten Auftrittsmusters wieder eine Menge von nicht notwendigerweise gleichförmigen Elementen eingesetzt wird, und sich diese Mengen und damit das von ihnen beschriebene Auftrittsmuster voneinander unterscheiden.

Fig. 1

EP 2 306 349 A1

## Beschreibung

Die Erfindung betrifft ein Verfahren zur Prüfung der Echtzeitfähigkeit eines Systems, insbesondere eines Computersystems.

Die Analyse des zeitlichen Verhaltens von eingebetteten Echtzeitsystemen wird zur Automatisierung der Entwicklung solcher Systeme benötigt. Für die korrekte Funktionsweise von Echtzeitsystemen ist nicht nur die korrekte, sondern auch die rechtzeitige Ermittlung von Berechnungsergebnissen notwendig. Beispiele für solche Systeme sind die Airbag-Steuerung oder eine Motorsteuerung.

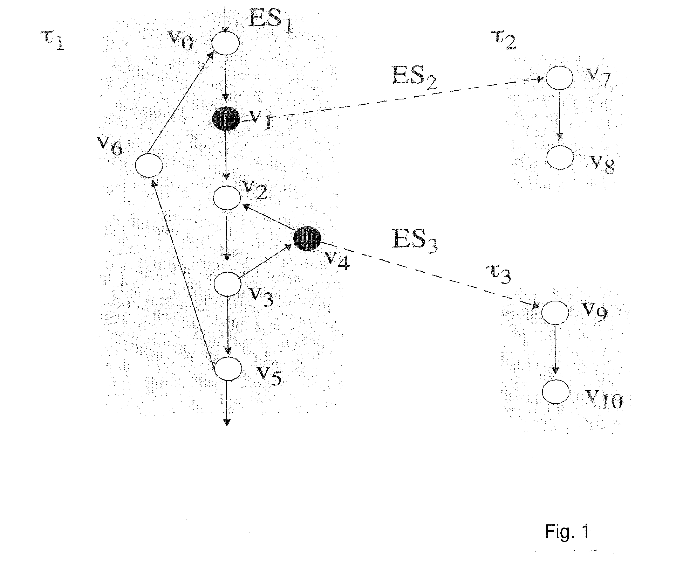

Betrachtet wird ein Modell von miteinander kommunizierenden Tasks gemäß Fig. 1. Eine "Task" ist dabei eine Folge von Verarbeitungsschritten, welche eine Menge von Eingabewerten verarbeitet und dabei Berechungsergebnisse oder Veränderungen des Systems erzeugt. Eine Task kann durch eine algorithmische Beschreibung oder eine Beschreibung einer die Funktionalität ausführenden Hardware repräsentiert werden. Dabei können Tasks andere Tasks aktivieren, welche beispielsweise die Berechungsergebnisse der aktivierenden Task weiterverarbeiten. Tasks können auch auf Ressourcen zugreifen. Die Aktivierungen oder Ressourcenzugriffe können an beliebigen Punkten im Ablauf der Task erfolgen. Die Aktivierungen einer Task oder der Ressourcenzugriff werden im Folgenden als "Ereignis" bezeichnet.

Um für ein solches Modell schnelle Analysen durchführen zu können, wird eine Beschreibung des "Auftrittsverhaltens von Ereignissen" benötigt. Unter "Auftrittsverhalten von Ereignissen" ist das zeitliche Auftrittsverhalten, also die zeitlichen Abstände von mehreren Ereignissen voneinander, zu verstehen. Unter einem "Auftrittsmuster" ist eine Beschreibung des Auftrittsverhaltens zu verstehen. Das "Auftrittsmuster" besteht aus einer Mehrzahl von Beschreibungselementen. Die Beschreibungselemente können gleichartig oder unterschiedlich sein; sie repräsentieren jeweils einen Teil des "Auftrittsverhaltens der Ereignisse". Eine mögliche Beschreibung eines "Auftrittsmusters" ist die sogenannte "Ereignisdichte". Daneben ist es auch möglich, ein "Auftrittsmuster" beispielsweise durch eine Periode und einen Jitter zu beschreiben.

Bei der Beschreibungsform der "Ereignisdichte" wird die maximale/minimale Anzahl der Ereignisse in Zeitintervallen vorgegebener Länge spezifiziert. Dabei kann die Ereignisdichte Schwankungen unterworfen sein.

Außerdem sollte die Beschreibung auch eine schnelle Analyse des zeitlichen Verhaltens, insbesondere der garantierten Einhaltung von vorgegebenen Zeitschranken, unterstützen. Es ist insbesondere wichtig, aus einer Beschreibung des "Auftrittsverhaltens von Ereignissen" schnell für gegebene Intervalle die Anzahl der in diesen auftretenden Ereignisse und für gegebene Ereignisanzahlen ein Intervall, in denen diese Anzahl auftreten kann, zu bestimmen. Meist sind dabei nur die Intervalllängen von Bedeutung und es werden maximale bzw. minimale Intervalllängen für bestimmte Ereignisanzahlen oder maximale bzw. minimale Ereignisanzahlen für bestimmte Intervalllängen benötigt. Besonders vorteilhaft sind dabei Beschreibungen, die diese Ermittlung mit einem linearen Aufwand bezüglich der Anzahl der Elemente der Beschreibung ermöglicht.

Viele Arbeiten in dem Bereich verwenden ein rein periodisches Auftrittsmuster.

Aus K. Gresser. Echtzeitnachweis Ereignisgesteuerter Realzeitsysteme. Dissertation, VDI Verlag, Düsseldorf, 10(286), 1993 ist eine Beschreibung für Auftrittsmuster von Ereignissen bekannt, die als Ereignisstrommodell bezeichnet wird. Ein "Ereignisstrom" wird dabei durch eine Menge von Tupeln, jeweils bestehend aus einem Zyklus z und einem Abstand a, beschrieben. Die Tupel können als "Ereignisstromelemente" bezeichnet werden. Der Abstand wird zu einem für Ereignisstromelemente gleichen festgelegten Ursprung angenommen. Jedes Ereignisstromelement erzeugt ein eigenes Auftrittsmuster, wobei das erste Ereignis des Ereignisstromelements mit einem Abstand a vom gemeinsamen Ursprung auftreten kann und die folgenden Ereignisse dann jeweils um den Zyklus z versetzt folgen. Das zweite Ereignis kann also mit Abstand von a+z zum Ursprung, das dritte Ereignis mit a+2z und so weiter folgen. Der gesamte Ereignisstrom ergibt sich durch eine Überlagerung der Auftrittsmuster aller Ereignisstromelemente. Weiterhin werden in der Arbeit nur solche Ereignisströme als gültig angesehen, welche ein Auftrittsmuster erzeugen, bei dem die größten Dichten von Ereignissen jeweils vom Ursprung beginnen. Deshalb muss mindestens einem Ereignisstromelement der initiale Abstand Null zugeordnet sein. Dabei wird davon ausgegangen, dass der Ereignisstrom eine obere Schranke für ein "maximales Auftrittsmuster" von Ereignissen beschreibt. Unter einem "maximalen Auftrittsmuster" wird ein Auftrittsmuster verstanden, welches eine maximal mögliche Ereignisdichte aufweist. Im realen Ablauf wird ein weniger dichtes Auftreten der Ereignisse in einem System als durch den Ereignisstrom beschreiben als zulässig angesehen. Zulässig heißt dabei, dass Zeitschranken, deren Einhaltung für den Ereignisstrom garantiert werden können, auch bei der verringerten Ereignisdichte eingehalten werden. Für dieses Modell wird ein Echtzeitanalyseverfahren beschrieben.

In neueren Arbeiten (K. Albers, F. Slomka An Event Stream Driven Approximation for the Analysis of Real-Time Systems. IEEE Proceedings of the 16th Euromicro Conference on Real-Time Systems, 2004, S. 187-195; K. Albers, F. Slomka Efficient Feasibility Analysis for Real-Time Systems with EDF-Scheduling. Proceedings of the Design Automation and Test Conference in Europa (DATE'05) S. 492-497) wird dafür eine sehr effiziente Echtzeitanalyse beschrieben. Problematisch an dieser Beschreibung ist, dass Ereignisschübe (bursts) nicht effizient repräsentiert und damit auch nicht effizient analysiert werden können. Unter einem "Ereignisschub" wird eine zeitlich begrenzte Dichtezunahme von Ereignissen innerhalb eines "Auftrittsmusters" verstanden. Das Ereignisstrommodell erfordert es, dass jedes Ereignis innerhalb eines Ereignisschubs durch ein eigenes Ereignisstromelement repräsentiert werden muss. Nur wenn Ereignisschübe innerhalb eines Auftrittsmusters periodisch wiederholt auftreten, reicht es aus, den Ereignissen des ersten Ereignisschubs jeweils ein Ereignisstromelement zuzuordnen. Da Ereignisschübe tausende Elemente umfassen können, ist das Ereignisstrommodell als Beschreibungsform für solche Systeme ungeeignet.

In S. Chakraborty, L. Thiele, A New Task Model for Streaming Applications and its Schedulability Analysis, IEEE Proceedings of the Design Automation and Test in Europe Conference (DATE'05), pp. 486-491, 2005 wird eine Beschreibungsmöglichkeit für Auftrittsmuster vorgestellt, welche auf eine effiziente Repräsentation von Ereignisschüben spezialisiert ist. Wieder werden die Auftrittsmuster durch eine Menge von Tupeln beschrieben. Diese bestehen in diesem Modell aus einer Ereignisanzahl und einem Intervall, und geben an, wie viele Ereignisse in einem Intervall dieser Länge maximal auftreten können. Dabei beschränken sich die einzelnen Tupel gegenseitig, so dass nur Auftrittsmuster zulässig sind, die allen Tupeln genügen. Mit diesem Modell können bestimmte Ereignisschübe effizient beschrieben werden. Problematisch an der Beschreibungsform ist aber, dass die vorgeschlagene Analyse eine Bestimmung vieler Linearkombinationen aller Tupel erfordert und deshalb nicht effizient durchführbar ist. Weiterhin können viele Arten von Ereignisschüben durch das Modell nicht effizient repräsentiert werden. Ein Auftrittsmuster, bei dem beispielsweise die ersten beiden Ereignisse mit einem Abstand t und alle weiteren Ereignisse mit einem Abstand 1>t zu ihrem jeweiligen Vorgängerereignis auftreten, kann durch dieses Modell nicht effizient repräsentiert werden. Jedes Ereignis außer dem ersten müsste durch ein eigenes Tupel beschrieben werden. Weiterhin sind solche Auftrittsmuster nicht beschreibbar, in denen Ereignisschübe mit unterschiedlichen internen Auftrittsmustern vorkommen.

In K. Richter, Compositional Scheduling Analysis Using Standars Event Models, Dissertation, TU Braunschweig, 2005 wird eine Beschreibung vorgestellt, bei der Ereignisse durch eine Periode, einen Ereignisjitter und einen Mindestabstand zwischen Ereignissen beschreiben werden. Der "Ereignisjitter" beschreibt dabei ein Zeitintervall, in dem die prinzipiell periodischen Auftritte schwanken können. Umfasst der Ereignisjitter mehrere Perioden, so können alle diejenigen Ereignisse, die innerhalb des Zeitintervalls auftreten, nahezu gleichzeitig auftreten. Sie werden lediglich durch den Mindestabstand getrennt.

Mit diesem Modell kann ein einfacher initial auftretender Ereignisschub (burst) mit einem einfachen Mindestabstand zwischen den Ereignissen innerhalb des Ereignisschubs beschrieben werden. Komplexere Ereignisschübe, welche z. B. wiederholt auftreten können, oder Ereignisschübe mit einem komplexeren Auftrittsmuster der Ereignisse innerhalb des Ereignisschubs können mit dieser Beschreibung nicht repräsentiert werden.

Aufgabe der vorliegenden Erfindung ist es, die vorgenannten Nachteile nach dem Stand der Technik zu beseitigen.

Diese Aufgabe wird durch die Merkmale der Ansprüche 1 und 7 gelöst. Zweckmäßige Ausgestaltungen ergeben sich aus den Merkmalen der Ansprüche 2 bis 6.

Es wird ein Verfahren zur Analyse, insbesondere Echtzeitanalyse, eines Systems, insbesondere eines Computersystems, vorgeschlagen, bei dem eine Menge unterschiedlicher Tasks ($\tau$) vorgesehen ist,
wobei die Tasks ($\tau_n$) zumindest teilweise wiederholend vom System angefordert und abgearbeitet werden
oder
wiederholt Ereignisse durch Anforderungen an Teilkomponenten des Systems erzeugen,
wobei ein Auftrittsmuster der die Tasks anfordernden oder von der Task erzeugten Ereignisse während der Analyse zumindest teilweise durch eine Beschreibung von Ereignisdichten repräsentiert wird,
welche aus einer Menge von Elementen besteht, die jeweils einen Teil des Auftrittsmusters der Ereignisse beschreiben,
wobei mindestens zwei Elemente zur Beschreibung des von ihnen repräsentierten Auftrittsmusters eine weitere Menge von weiteren Elementen umfassen,
und sich die weiteren Mengen und das von ihnen beschriebene Auftrittsmuster voneinander unterscheiden.

Weiterhin wird ein Verfahren zur Analyse, insbesondere zur Echtzeitanalyse, eines Systems, insbesondere eines Computersystems, vorgeschlagen, bei dem eine Menge unterschiedlicher Tasks ($\tau$) vorgesehen ist,
wobei die Tasks ($\tau_n$) zumindest teilweise wiederholend vom System angefordert und abgearbeitet werden
oder
wiederholt Ereignisse durch Anforderungen an Teilkomponenten des Systems erzeugen,
wobei mindestens eine Task bei ihrer Aktivierung mehrere Ereignisse erzeugt,
wobei ein inneres Verhalten der Task durch einen Kontrollfluss beschrieben wird, welcher durch einen Kontrollflussgraf repräsentiert wird,
wobei ein Schritt vorgesehen ist, bei dem aus für mehrere zusammenhängende Teilgrafen und/oder Knoten des Kontrollflussgrafen ermittelten Auftrittsmustern der Ereignisse ein weiteres Auftrittsmuster für den Kontrollflussgrafen ermittelt wird
und
zu dieser Ermittlung teilweise mindestens ein zusätzliches Auftrittsmuster von Ereignissen der Teilgrafen herangezogen wird,
und

dieses zusätzliche Auftrittsmuster ein mögliches Auftrittsmuster von Ereignissen in zeitlicher Abhängigkeit von bestimmten Durchlaufpunkten der Teilgrafen repräsentiert.

Diese Verfahren werden im Folgenden näher erläutert. Dabei werden unter "Ressourcen" Arbeitsmittel in einem System verstanden, welche nur begrenzt verfügbar sind bzw. mengenmäßig oder zeitlich zugeteilt werden, wie z. B. Speicher, Kapazität auf Kommunikationsmedien wie Busse, Rechenzeit auf Prozessoren und anwendungsspezifischen Schaltlogiken.

Im Sinne der vorliegenden Erfindung wird unter dem Begriff "Auftrittsmuster" ein zeitliches Auftrittsmuster verstanden, das den Auftritt von Ereignissen auf einem Zeitstrahl beschreibt.

Bei einem "weiteren Kontrollflussgrafen" im Sinne der vorliegenden Erfindung kann es sich um eine Teilmenge des "Kontrollflussgrafen" handeln.

Unter "Kosten" werden im Folgenden die für die Analyse jeweils benötigten Kostenarten, wie Rechenzeit oder Energieaufwand, verstanden. Diese stehen in begrenzten Zeitintervallen auch nur begrenzt zur Verfügung. Eine Analyse, die einen Mindestkostenaufwand für bestimmte Ergebnisse, wie die maximale Anzahl der auftretenden Ereignisse bestimmt, bestimmt somit gleichzeitig auch den Mindestzeitaufwand für dieses Ergebnis.

Im Folgenden wird eine erste Ausführungsvariante für die erfindungsgemäße Lösung gemäß Anspruch 1 und die Ausgestaltungen gemäß der Ansprüche 2 bis 12 vorgestellt:

Die hierarchischen Ereignisströme (HES).

Eine "Ereignissequenz" beschreibt das "Auftrittsmuster" von Ereignissen durch ihre "Ereignisdichte", ein "Ereignissequenzelement" ist ein Teileelement dieser Beschreibung. Ein Auftrittsmuster von Ereignissen wird durch eine "hierarchische Ereignissequenz $\Theta$" beschrieben. Dieser besteht aus einer Menge von hierarchischen Ereignissequenzelementen. Ein "hierarchisches Ereignissequenzelement $\omega$" wird durch eine Periode (oder Zyklus) p, einen initialen Anfangsabstand a, eine Begrenzung n und eine rekursiv eingebettete hierarchische Ereignissequenz $\Theta$' charakterisiert ($\omega$=(p, a, n, $\Theta$')). Die Begrenzung n begrenzt die in einer Periode von der eingebetteten hierarchischen Ereignissequenz $\Theta$' maximal erzeugbare Anzahl an Ereignissen. Um einen Rekursionsanfang zu ermöglichen, kann ein hierarchisches Ereignissequenzelement $\omega$ eine eingebettete hierarchische Ereignissequenz oder auch lediglich ein einfaches Ereignis beinhalten. In diesem Fall ist nur eine Begrenzung mit dem Wert Eins sinnvoll. Die Periode kann auch durch den Wert $\infty$ belegt werden, welcher eine einmalige Erzeugung des Auftrittsmusters repräsentiert.

Eine konkrete hierarchische Ereignissequenz, bei deren Auftrittsmustern von Ereignissen die größten Dichten der Ereignissen immer am Anfang sind, wird als "hierarchischer Ereignisstrom" bezeichnet. Er ermöglicht effiziente Verfahren zur Echtzeitanalyse. Es kann insoweit beispielsweise das in Karsten Albers, Frank Slomka, An Event Stream driven Approximation for the Analysis of Real-Time System, IEEE Proceedings of the 16th Euromicro Conference on Real-Time Systems 2004 (ECRTS'04), Catania, Italy, S. 187-195 vorgestellte Echtzeitanalyseverfahren sinngemäß angewendet werden.

In der ersten Ausführungsvariante wird ein Wert der Begrenzung durch eine Anzahl von Ereignissen repräsentiert. Es ist aber auch denkbar, eine maximale Intervalllänge als Begrenzung anzugeben. In der ersten Ausführungsvariante werden maximal so viele Ereignisse in einer Periode durch das hierarchischen Ereignissequenzelement erzeugt, wie von der rekursiv eingebetteten Ereignissequenz maximal im einem Intervall mit der Länge der Begrenzung erzeugt werden können.

Das Auftrittsmuster der Ereignisse einer hierarchischen Ereignissequenz wird durch eine Überlagerung der Auftrittsmuster der einzelnen hierarchischen Ereignissequenzelemente gebildet. Das erste Ereignis im Auftrittsmuster eines hierarchischen Ereignissequenzelements kann nach dem initialen Abstand a erfolgen. Das Auftrittsmuster dieses und der folgenden Ereignisse wird durch das Auftrittsmuster der eingebetteten hierarchischen Ereignissequenz $\Theta$' beschrieben, welches allerdings gegenüber dem Ursprung der Auftrittsmuster um den initialen Abstand a verschoben ist. Es umfasst dabei nur die ersten n Ereignisse der eingebetteten hierarchischen Ereignissequenz $\Theta$'. Diese werden im Folgenden als "Ereignisgruppe" bezeichnet. Diese eingebettete hierarchische Ereignissequenz $\Theta$' wird nun mit der Periode p wiederholt, beginnt also bei a+p, a+2p, a+3p, usw.

Eine hierarchische Ereignissequenz $\Theta$ kann ihrerseits wieder rekursiv in eine hierarchische Ereignissequenz eingebettet sein. In diesem Fall ist das obige Verfahren wiederholt anzuwenden.

Um eine effiziente Realisierung der Analyse zu ermöglichen, ist es von Vorteil, ausschließlich hierarchische Ereignisströme $\Theta$ zu verwenden, bei denen die von den einzelnen Ereignisstromelementen erzeugten Ereignisgruppen voneinander separiert sind, sich also nicht überlappen dürfen (Separationsbedingung).

Der folgende HES genügt beispielsweise der Separationsbedingung: $\Theta_A$={(100, 0, 7, $\Theta_B$), (100, 30, 5, $\Theta_C$)}. Es werden die in $\Theta_A$ rekursiv eingebetteten hierarchischen Ereignisströme $\Theta_B$ und QC benötigt: $\Theta_B$ = { (3, 0, 1, e) und $\Theta_C$ ={ (7, 0, 1, e), (7, 3, 1, e)}. Im ersten Element dieses HES $\Theta_A$ können pro Periode jeweils sieben Ereignisse erzeugt werden, im zweiten Element des HES $\Theta_A$ jeweils fünf Ereignisse. Die Abstände zwischen diesen Ereignissen und damit die Intervalle, in denen die sieben bzw. fünf Ereignisse erzeugt werden können, werden durch die jeweils rekursiv eingebetteten Ereignisströme $\Theta_B$ und $\Theta_C$ bestimmt. So kann für das erste Element des HES jeweils in einem um drei Kosteneinheiten größeren Intervall ein weiteres Ereignis auftreten. In einem Intervall der Länge drei können maximal zwei Ereignisse auftreten, da das erste Ereignis zum Zeitpunkt Null auftreten kann und die Ereignisse eine Periode von drei haben. In einem Intervall der Länge sechs können maximal drei Ereignisse, in einem Intervall der Länge neun maximal vier Ereignisse, der Länge 12 maximal fünf Ereignisse auftreten. Für die Gesamtzahl von sieben Ereignissen pro Periode ergibt sich somit ein minimales Gesamtintervall von 18 Kosteneinheiten, in denen diese Ereignisse auftreten können. - Beim zweiten Element wird das Auftreten durch den rekursiv eingebetteten Ereignisstrom $\Theta_C$ bestimmt. Zwei Ereignisse können dabei erstmals in einem Kostenintervall der Länge drei, drei Ereignisse in einem Kostenintervall der Länge sieben, vier Ereignisse in einem Kostenintervall der Länge 10 und fünf Ereignisse in einem Kostenintervall der Länge 17 auftreten. Die Gesamtmenge der in einer Periode des zweiten Elements von $\Theta_A$ erzeugbaren Anzahl von Ereignissen ist auf fünf begrenzt, die somit in einem Kostenintervall der Länge 17 erzeugt werden können.

Da dem zweiten Element von $\Theta_A$ ein initialer Abstand von 30 zugeordnet ist, werden die Ereignisse der ersten Periode dieses Elementes in einem Intervall zwischen den Kostenpunkten 30 und 47 erzeugt. Die Ereignisse der ersten Periode des ersten Elementes von $\Theta_A$ werden im Fall des maximalen Auftrittsmusters in einem Intervall der Länge 18 Kosteneinheiten startend beim Kostenpunkt Null erzeugt. Die Intervalle in denen die Ereignisse der zweiten Periode erzeugt werden, liegen bei [100,118] bzw. [130,147]. Die Intervalle überlappen sich nicht, weshalb $\Theta_A$ der Separationsbedingung genügt. Für eine einfache Validierung der Separationsbedingung ist es vorteilhaft, wenn den einzelnen Elementen eines hierarchischen Ereignisstroms identische Perioden (homogene HES) zugeordnet sind. Dies ist allerdings nicht zwingend notwendig, insbesondere wenn für die Elemente zumindest teilweise die Gesamtanzahl der von ihnen erzeugbaren Ereignisse beschränkt ist. Die Einführung der Separationsbedingung ermöglicht eine einfache und effiziente Ermittlung der in einem am Ursprung des Auftrittsmusters startenden Intervalls I auftretenden Ereignisanzahl in Abhängigkeit von der Länge des Intervalls. Sie kann beispielsweise durch folgende Formel ermittelt werden:

$$ESF(I,\Theta) = \begin{cases} 1 & falls\ \Theta = e \\ \sum_{\omega\ in\ \Theta} \left( \left\lfloor \frac{1-a_\omega}{p_\omega} \right\rfloor n_\omega + \min(n_\omega, ESF(((I-a_\omega) \bmod p_\omega),\Theta_\omega)) \right) & sonst \end{cases}$$

Die Formel wertet die einzelnen Ereignissequenzelemente getrennt aus, wobei auf Grund der Separationsbedingung nur die letzte Periode jedes Elementes genauer analysiert und deshalb rekursiv ausgewertet werden muss. Für die vorhergehenden Perioden darf jeweils die Begrenzung als erzeugte Ereigniszahl zu Grunde gelegt werden. In der Formel stellt mod die Modulooperation dar, welche den Rest der Division bestimmt.

Es ist auch denkbar, Beschreibungen zu verwenden, bei denen die Separationsbedingung nicht immer erfüllt wird. Dies führt zu einem höheren Analyseaufwand, da von den Elementen deren Auftrittsmuster sich überlappen können, mehrere Perioden separat zu analysieren sind.

Die Beschreibungsform kann mit geringfügigen Anpassungen auch zur Repräsentation von in Intervallen minimal auftretenden Ereignisanzahlen verwendet werden.

Im Folgenden werden die Verfahren gemäß der Ansprüche 13 bis 19 näher erläutert.

Es ermöglicht eine exakte Bestimmung der von einer Task ausgehende Menge an Ereignissen getrennt für jede zulässige Intervalllänge. Das Verfahren ermöglicht eine Ermittlung der zeitlichen Dichte der von der Task ausgehenden Ereignisse aus den in die Task eingehenden Aktivierungen und der Beschreibung des Kontrollflusses der Task. "Ausgehende Ereignisse" können dabei Aktivierungen anderer Tasks, Zugriffe auf Ressourcen, wie Speicher und Busse, oder andere Einwirkungen auf das System, Teile davon oder die Umgebung sein. Aktivierungen und Ereignisse können vorzugsweise mit Hilfe des hierarchischen Ereignissequenzmodells beschrieben werden. Es wird eine Methode vorgeschlagen, um aus dem internen Kontrollfluss einer Task und die in diese Task eingehenden hierarchischen Ereignissequenz die aus dieser Task ausgehenden hierarchischen Ereignissequenzen zu bestimmen. Die hierarchische Ereignissequenz beschreibt dabei die möglichen zeitlichen Dichten der Ereignisse. Bei dem erfindungsgemäßen Verfahren werden die Informationen über die zeitlichen Beziehungen vom internen Kontrollfluss der Task abstrahiert. Damit ist es möglich, die Fälle maximaler Auftrittsmuster über alle Ausführungspfade innerhalb der Task hinweg zu bestimmen.

Im Folgenden wird eine mögliche Ausführungsform der Methodik, die Ereignisabhängigkeitsanalyse, detailliert beschrieben.

Eine Task wird dabei durch einen Kontrollflussgrafen modelliert, welcher sowohl Verzweigungen als auch Schleifen beinhalten kann. Die einzelnen Knoten des Kontrollflussgrafen können dabei Basisblöcke darstellen. Ein "Basisblock" ist eine Sequenz von aufeinander folgenden Instruktionen und ist dadurch gekennzeichnet, dass Verzweigungen und die Generierung von Ereignissen nur am Ende des Basisblocks erfolgen können. Ereignisse werden an bestimmten ausgezeichneten Basisblöcken generiert. Wesentlich für die Vorteilhaftigkeit der erfindungsgemäßen Analyse ist die Existenz von Tasks, welche bei einem Durchlauf mehrere Ereignisse erzeugen. Besonders vorteilhaft ist es, wenn diese Ereignisse zur Aktivierungen derselben Task führen oder anderweitig in einer Konkurrenz zueinander um dieselbe Ressource stehen. Ziel ist das mögliche zeitliche Verhalten dieser Ereignisse zueinander aus dem Kontrollflussgrafen der Task effizient zu ermitteln. Die Analyse besteht dabei aus folgenden Schritten:

Es erfolgt ein schrittweises Durchlaufen des Kontrollflussgrafen der Task. Bei jedem Schritt wird eine Aktualisierung der aus dem bereits durchlaufenen Teilgrafen der Task ausgehenden Ereignissequenz (bzw. -sequenzen) und von zusätzlichen, im Weiteren näher beschriebenen, Ereignissequenzen durchgeführt. Dafür werden Operationen beschrieben, mit denen eine ausgehende Ereignissequenz eines Kontrollflussgrafen aus den ausgehenden Ereignissequenzen von Teilgrafen, aus denen der Kontrollflussgraf zusammengesetzt ist, gewonnen werden kann. Ebenfalls angegeben werden die Ereignissequenzen für einfache, aus einem einzigen Knoten bestehende Teilgrafen. Mit diesen Informationen und den Operationen ist es dann möglich, die ausgehenden Ereignissequenzen für beliebige Kontrollflussgrafen zu bestimmen.

Beinhaltet der Kontrollfluss Verzweigungen, so werden diese getrennt durchlaufen. Innerhalb einer Verzweigung werden die ausgehenden Ereignissequenzen und Ereignissequenzen für die einzelnen Zweige getrennt beschrieben. Die einzelnen Beschreibungen werden beim Zusammenlaufen der verschiedenen Verzweigungen miteinander vereinigt. Die Einzelheiten dieses Verfahrens werden im Folgenden näher beschrieben.

Zunächst wird die Analyse für Tasks beschrieben, deren Kontrollfluss keine Schleifen beinhaltet.

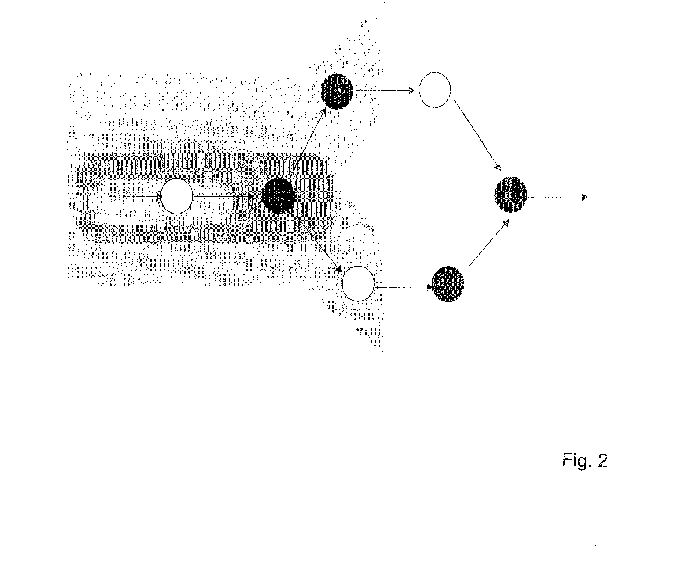

In Fig. 2 wird ein schrittweises Durchlaufens eines Taskgrafen veranschaulicht. Der Kontrollflussgraf stellt hier den Kontroll-Datenfluss einer Task dar. Er besteht aus den Basisblöcken der Task und deren Aktivierungs- bzw. Kommunikationsbeziehungen. Ein Basisblock beinhaltet einen Ausführungsabschnitt und ist dadurch gekennzeichnet, dass er nur als ganzes aktiviert werden kann und Verzweigungen und Aktivierungen andere Basisblöcke oder Tasks nur am Ende des Basisblockes erfolgen. Die konkrete Ausführung einer Task ergibt sich somit aus einem Durchwandern des Kontrollflussgrafen entlang der Aktivierungsbeziehungen der einzelnen Basisblöcke. Der Durchlauf beginnt an einem Startknoten der Task. Dieser wird von den in die Task eingehenden Ereignissen aktiviert. Bei jedem Schritt des Durchlaufs wird ein Nachfolgeknoten von einem bereits analysierten Knoten betrachtet. Bei Verzweigungen werden die unterschiedlichen Zweige getrennt abgearbeitet. Knoten, die mehrere Vorgängerknoten haben, werden erst abgearbeitet, wenn alle Vorgängerknoten abgearbeitet wurden. Der Kontrollflussgraf wird somit beim Durchlauf schrittweise rekonstruiert. Bei jedem Schritt des Durchlaufens wird ein weiterer Knoten zu dem bereits analysierten Teilgrafen zugefügt. Diese Rekonstruktion muss nicht im Verfahren ausgeführt werden, sie bestimmt nur die Abarbeitungsreihenfolge der Knoten. In jedem Schritt der Abarbeitung wird der aus dem bisherigen Teilgrafen resultierende Ereignisstrom bestimmt. Dazu werden die Informationen für den Knoten selbst, wie Ausführungskosten zum Beispiel in Form von Rechenzeit, ob ein Ereignis generiert wird, und die für die Vorgängerknoten ermittelten Ereignisströme herangezogen. Informationen der anderen Knoten oder Strukturinformation über den bisher durchlaufenden Teilgrafen sind nicht mehr relevant. Als Basisoperationen für dieses schrittweise Abarbeiten werden Methoden benötigt, um

1. einen Knoten an einen bestehenden Teilgrafen anzuhängen (Konkatenierungsoperation) oder

2. zwei (oder mehr) Teilzweige des Teilgrafen wieder zu vereinigen (Vereinigungsoperation).

Für diese Fälle werden nun Berechnungsmethoden benötigt, um aus den für die Vorgängerteilgrafen verfügbaren Informationen die entsprechenden Informationen für den zu bildenden Teilgrafen zu generieren. Unter "Informationen" werden hier die maximalen und minimalen aus dem Teilgrafen resultierenden Ereignisströme sowie die zu ihrer Bestimmung benötigten Ereignissequenzen verstanden.

Die Ereignissequenzen sind insbesondere die Start-Ereignissequenz, die End-Ereignissequenz, die Innere-Ereignissequenz und die Totale-Ereignissequenz. Es werden nicht immer sämtliche Ereignissequenzen benötigt. Sie sind über das Ergebnis ihrer Ereignissequenzanalyse definiert. Die "Start-Ereignissequenz" beschreibt für jede mögliche Anzahl an Ereignissen die Kosten, welche von der Aktivierung des ersten Knotens des Teilgrafen benötigt werden, um die fragliche Anzahl von Ereignissen aus dem Teilgrafen zu generieren.

Die "End-Ereignissequenz" beschreibt umgekehrt rückblickend von der Fertigstellung des Endknotens des Teilgrafen wie viel Kosten zuletzt benötigt wurden, um eine bestimmte Anzahl von Ereignissen zu generieren.

Durch die "Innere-Ereignissequenz" werden für jede mögliche Anzahl von Ereignissen die minimalen Kosten bestimmt, welche in einem beliebigen Durchlauf des Teilgrafen benötigt wurden, um diese Anzahl von Ereignissen zu generieren. Sie entspricht dem resultierenden Ereignisstrom des Teilgrafen.

Die "Totale-Ereignissequenz" beschreibt für jede mögliche Anzahl von Ereignissen die minimalen Kosten, die bei einem beliebigen Durchlaufen des Teilgrafen von der Aktivierung des Startknoten bis zur Fertigstellung des Endknotens benötigt werden. Dabei müssen bei steigender Ereignisanzahl nur monoton steigende Kosten betrachtet werden. Sind die Kosten zur Erzeugung von vier Ereignissen beispielsweise niedriger als zur Erzeugung von drei Ereignissen, so werden auch zur Erzeugung für die drei Ereignisse die Kosten für vier Ereignisse angenommen.

Die Sequenzen können beispielsweise effizient in Form einer Ereignissequenz, vorteilhafterweise einer hierarchischen Ereignissequenz (HES), beschrieben werden. Dabei sollten vorzugsweise bei der Totalen-Ereignissequenz (TS) die Kosten eines potenziellen Weges s durch den Teilgrafen, bei dem keine Ereignisse generiert werden, zusätzlich zur Ereignissequenz notiert werden (TS = (a, Θ)).

Die Totale-Ereignissequenz spielt bei der Betrachtung von Schleifenkonstrukten eine wichtige Rolle. Dabei wird nicht jeweils eine maximal mögliche Anzahl von Schleifendurchläufen, sondern auch jede mögliche Anzahl zwischen der maximalen und der minimalen Anzahl von Schleifendurchläufen in Betracht gezogen.

Die kleinste mögliche Einheit, die beim Durchlaufen durch den Kontrollflussgrafen betrachtet werden muss, ist ein einzelner Knoten. Jeder Knoten des Kontrollflussgrafen kann selbst wieder als Graf aufgefasst werden. Der Knoten kann durch eine initiale Start-, End-, Inner- und Totale-Ereignissequenz charakterisiert werden. Dabei existieren zwei verschiedene mögliche Anfangssets von Ereignissequenzen, abhängig davon, ob ein Knoten ein Ereignis generiert oder nicht. Im folgenden sind die initialen Ereignissequenzen für einen Knoten, der ein Ereignis generiert, aufgeführt: StS = $\{(\infty, k, 1, e)\}$, ES = $\{(\infty, 0, 1, e)\}$, IS = $\{(\infty, 0, 1, e)\}$ und TS = $(k, (\infty, k, 1, e))$.

Dabei stellt StS die Start-Ereignissequenz, ES die End-Ereignissequenz, IS die Inner-Ereignissequenz und TS die Totale-Ereignissequenz dar, der Wert von k sind die Kosten des Knotens. Um die maximalen Ereignisdichten zu bestimmen, werden hier die minimalen Ausführungskosten des Knotens benötigt. TS wird dabei als Tupel aus den Mindestdurchlaufkosten auch ohne Ereignisgenerierung und der Ereignissequenz beschrieben.

Für einen Knoten, welcher kein Ereignis generiert, ergeben sich folgende initiale Ereignissequenzen: StS = { }, ES = { }, IS = { } und TS = (k, { }). Es sei noch bemerkt, dass ohne Verletzung der allgemeinen Anwendbarkeit, die Erzeugung der Ereignisse nur am Ende eines Knotens erfolgt.

Um die Ereignissequenzen für komplexe Grafen aus diesen Ereignissequenzen schrittweise aufzubauen, werden Methoden zur Vereinigung von Teilgrafen (Vereinigungsoperator) und zur Konkatenation eines Knotens an einen Teilgrafen (Konkatenationsoperator) benötigt.

Im Folgenden wird nun dargestellt wie ausschließlich mit den oben aufgeführten Ereignissequenzen und den beiden Methoden den aus einem Kontrollflussgrafen ausgehenden Ereignisstrom bestimmt werden kann.

Zunächst wird der Fall betrachtet, bei dem die Task nur von einem Ereignis aktiviert wird. Da jeder Knoten als Teilgraf aufgefasst werden kann, ist jeder Arbeitsschritt die Vereinigung von zwei Teilgrafen zu einem Neuen, der beide Teilgrafen umfasst. Das Problem reduziert sich damit auf das Problem, wie aus den Ereignissequenzen der Teilgrafen die Ereignissequenzen des resultierenden Teilgrafen bestimmt werden können.

Die einzelnen Teilgrafen können unterschiedliche Pfade durch den Kontrollflussgraf beinhalten, in denen die gleiche Anzahl an Ereignissen auftritt. Die Vereinigung der Teilgrafen kann zu weiteren zusätzlichen Pfaden führen. Diese zusätzlichen Pfade können zu unterschiedlichen Kostenführen. Die Ereignissequenzen des vereinigten Teilgrafen müssen die minimalen bzw. maximalen Kosten der Teilgrafen und der sich durch die Vereinigung ergebenden zusätzlichen Pfade abdecken.

Bei der Konkatenation bzw. Aneinanderkettung von zwei Teilgrafen A und B werden die Ereignissequenzen des resultierenden Teilgrafen C wie folgt bestimmt. Die Start-Ereignissequenz von C ergibt sich aus einer Vereinigung der Start-Ereignissequenz von A mit einer Konkatenation der Totalen-Ereignissequenz von A mit der Start-Ereignissequenz von B.

Die End-Ereignissequenz von C wird bestimmt durch eine Vereinigung der End-Ereignissequenz von B mit der Konkatenation der End-Ereignissequenz von A und der Totalen-Ereignissequenz von B.

Die Innere-Ereignissequenz ergibt sich aus der schrittweisen Vereinigung von drei Ereignissequenzen. Dies sind einerseits die Innere-Ereignissequenzen der Teilgrafen A und B und andererseits eine Ereignissequenz, die sich aus der Konkatenation der End-Ereignissequenz von A mit der Start-Ereignissequenz von B ergibt.

Die Totale-Ereignissequenz von C ist lediglich eine Konkatenation der Totalen-Ereignissequenzen von A und B.

Bei der Vereinigung von Teilgrafen erfolgt lediglich eine Vereinigung der einzelnen Ereignissequenzen des einen Teilgrafen mit der jeweils korrespondieren Ereignissequenz des anderen Teilgrafen. Also alle Start-, End-, Totalen- und Inner-Ereignissequenzen werden jeweils miteinander vereinigt. Die resultierende Innere-Ereignissequenz des Gesamtgrafen entspricht der resultierenden Ereignissequenz des Gesamtgrafen.

Für eine effiziente Realisierung der Operationen ist es vorteilhaft, wenn die hierarchischen Ereignissequenzen zumindest weit gehend der Separationsbedingung genügen.

Im Folgenden wird nun eine mögliche, konkrete und effiziente Ausführungsvariante für die Vereinigungsoperation von zwei oder mehr (hierarchischen) Ereignissequenzen näher ausgeführt. Sie wird anhand der hierarchischen Ereignisströme erläutert, kann aber auch in vereinfachter Form auf die einfachen Ereignisströme angewendet werden. Weiterhin werden nur die Ereignissequenzen bei maximaler Ereignisdichte betrachtet und es wird in den Erläuterungen davon ausgegangen, dass alle Ereignisse auch diesem maximalen Auftrittsmuster entsprechend auftreten. Dies stellt aber keine Einschränkung da. Im realen System können Ereignisse auch mit geringerer zeitlicher Dichte auftreten, sofern die durch die Ereignissequenz vorgegebenen Höchst- bzw. Mindestdichten von Ereignissen nicht über- bzw. unterschritten werden. Die resultierende vereinigte Ereignissequenz beinhaltet für alle Kostenintervalle die jeweils maximal erzeugbare Anzahl von Ereignissen der in die Vereinigungsoperation eingehenden Ereignissequenzen. Die Ausführung der Operation für die bestmöglichen Ereignissequenzen folgt analog. Im Falle, dass die eingehenden Ereignissequenzen die Ereignisstromeigenschaft erfüllen, erfüllt auch die aus dieser Ausführungsvariante der Vereinigungsoperation resultierende Ereignissequenz die Ereignisstromeigenschaft. Die Vereinigungsoperation erhält also diese Eigenschaft.

Die Vereinigung von zwei Ereignissequenzen erfolgt in der vorgeschlagenen Ausführungsvariante durch eine schrittweise Bestimmung der jeweils in Teilbereichen dominierenden Ereignissequenz. Eine Ereignissequenz dominiert eine andere Ereignissequenz, wenn sie im gleichen Intervall mehr Ereignisse erzeugen kann. Kann sie gleich viele Ereignisse erzeugen, so kann eine der beiden Ereignissequenzen als die Dominierende angesehen werden. Der vollständige Bereich der möglichen Anzahlen von erzeugbaren Ereignissen wird in einzelne Teilbereiche aufgespalten, in denen jeweils vollständig eine einzelne eingehende Ereignissequenz dominiert. Diese einzelnen Teilbereiche werden im Folgenden als "Dominierungsabschnitte" bezeichnet. Für jeden Dominierungsabschnitt kann nun aus der jeweils dominierenden eingehenden Ereignissequenz das entsprechende Element in die resultierende Ereignissequenz überführt werden. Dabei sind die Parameter, insbesondere der initiale Abstand und die maximale Anzahl der erzeugbaren Ereignisse, vorteilhafterweise so anzupassen, dass die von diesen Elementen erzeugten Ereignisse nur innerhalb des Dominierungsabschnittes auftreten können.

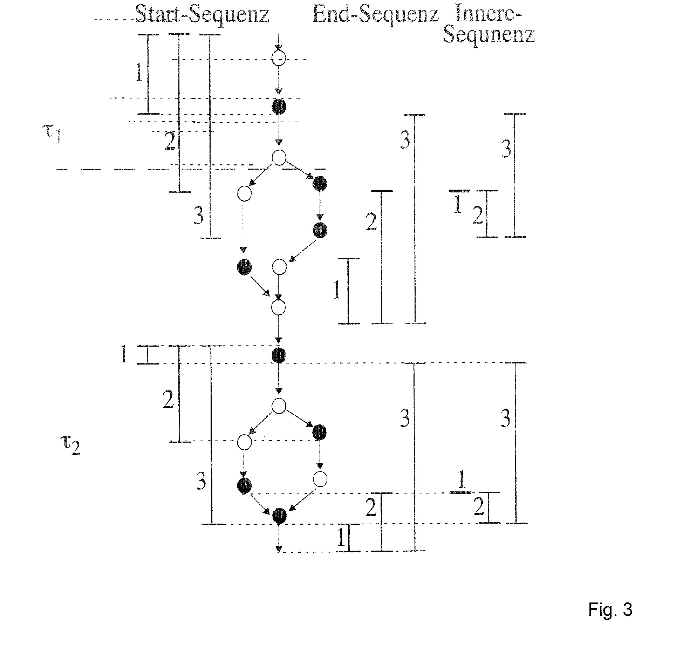

In Fig. 3 wird der Prozess zur effizienten Bestimmung der Dominierungssequenz veranschaulicht. Zunächst werden zwecks einfacher Darstellung nur einzelne einfache Ereignissequenzelemente betrachtet. Diese sind jeweils durch eine Periode und einen initialen Abstand gekennzeichnet. Die Funktion, welche für ein Element das minimale (maximale) Intervall angibt, in dem eine bestimmte Anzahl von Ereignissen auftritt (= Ereignisfunktion), kann durch eine Geradengleichung beschrieben werden. Der Anfangswert der Gerade ist der initiale Abstand und die Steigung ist durch die Periode gegeben. Ein Vergleich von zwei verschiedenen Ereignissequenzelementen von unterschiedlichen Ereignissequenzen reduziert sich dadurch auf schrittweise Minimumsbildung von zwei Geraden. Es ergeben sich dabei zwei mögliche Fälle. Entweder existiert ein Schnittpunkt zwischen den Geraden oder nicht. Wenn kein Schnittpunkt existiert, bildet eine Gerade über die gesamte mögliche Ereignisanzahl hinweg das Minimum und demzufolge dominiert das diese Gerade bestimmende Ereignissequenzelement das andere Element in allen möglichen Ereignisanzahlen. In diesem Fall wird die resultierende Ereignissequenz nur aus diesem dominierenden Element gebildet.

Existiert ein Schnittpunkt zwischen den Geraden, so wechselt an diesem die Dominierung. Die resultierende Ereignissequenz wird dann aus mindestens zwei Elementen gebildet. Diese ergeben sich aus den in den Teilabschnitten dominierenden Elementen, welche durch eine Anpassung des initialen Abstands und der maximal in einer Periode erzeugbare Anzahl von Ereignissen an die einzelnen Dominierungsabschnitte angepasst werden. Das erste Element wird mit einer Begrenzung über die von ihm maximal erzeugbare Anzahl von Ereignissen versehen, so dass nur Ereignisse bis zum Schnittpunkt erzeugt werden. Das zweite Element wird mit einem initialen Abstand versehen, der nur eine Erzeugung von Ereignissen auf oder jenseits des Schnittpunktes ermöglicht. Die Begrenzung des zweiten Elements wird so angepasst, dass die Gesamtanzahl der erzeugbaren Ereignisse nicht überschritten wird. Dadurch bleibt in der resultierenden Ereignissequenz auch die Separationsbedingung erhalten. Ein Schnittpunkt entsteht, wenn ein Element einen kleineren initialen Abstand, aber eine größere Periode hat als das andere Element. Bestehen Ereignissequenzen aus mehr als einem Element, ergeben sich für die sich aus den einzelnen Elementen ergebenden Separationsbereiche jeweils getrennt entsprechende Geraden. Dies kann dazu führen, dass die Dominierung mehrfach wechseln kann. In der vorgeschlagenen Ausführungsvariante der Operation wird für jeden Dominierungsabschnitt ein separates Ereignissequenzelement in die resultierende Ereignissequenz eingefügt. Diese können dann aber zum Teil mit exakten oder approximativen Kompressionsverfahren wieder zusammengefasst werden. Beispielsweise, wenn benachbarte Elemente die gleiche Periode haben, können diese zu einem Element mit dieser Periode zusammengefasst werden. Es werden immer alle solche Ereignissequenzelemente in den einzelnen Abschnitten miteinander verglichen, die zu der jeweils gleichen Anzahl von Ereignissen führen können. Werden Ereignissequenzelemente periodisch wiederholt, kann dies zu einem sich ständig wiederholenden Wechsel der Dominierung führen. Beispielhaft seien die folgenden einfachen Ereignissequenzen angeführt: $\Theta_1 = \{(\infty, 0, 200, e)\}$, $\Theta_2 = \{(\infty, 0, 100, e)\}$, $\Theta_3 = \{(25, 0, 1, e), (25, 1, 1, e)\}$ und $\Theta_4 = \{(12, 0, 1, e)\}$.

Die Dominierung wechselt in diesem Beispiel ab dem dritten Ereignis bis zur Dominierungsgrenze ständig zwischen einem Element aus $\Theta_3$ und einem Element aus $\Theta_4$. Um klare Dominierungen finden zu können, werden nun solche Elemente miteinander verglichen, die zu den gleichen Ereignisanzahlen führen. Dazu werden die Anzahl der betroffenen Elemente der beteiligten Ereignissequenzen aneinander angepasst. Dies kann beispielsweise geschehen, indem in allen Ereignissequenzen die Anzahl der Elemente auf das kleinste gemeinsame Vielfache der Elementzahlen der Einzelereignissequenzen gebracht wird. Die Anzahl der Elemente einer Ereignissequenz wird vergrößert, indem die Periode vergrößert (beispielsweise verdoppelt) wird und zur Kompensation die fehlenden Ereignisse durch zusätzliche Elemente erzeugt werden. Bei $\Theta_4$ beispielsweise wird die Anzahl der Elemente auf zwei erhöht, indem die Periode auf 24 verdoppelt und ein zusätzliches Element mit $(24, 12, 1, e)$ eingefügt wird. Die Ereignisse für diese Ereignissequenz werden dann nicht mehr durch ein Element, sondern abwechselnd durch die beiden Elemente erzeugt. Werden die Anzahlen der betroffenen Elemente der verschiedene Ereignissequenzen auf einen Nenner gebracht, dann können die jeweils korrespondierenden Elemente, die zu den gleichen Ereignisanzahlen führen, direkt miteinander verglichen werden. Die Perioden der einzelnen Ereignissequenzelemente spielen dabei keine Rolle. Beispielsweise bestimmen im obigen Beispiel die jeweils ersten Elemente die Intervalle zu den ungeraden Ereignisanzahlen 1,3,5,7,... und die zweiten Elemente die Intervalle zu den geraden Ereignisanzahlen 2,4,6,... Dies gilt zumindest nach der Anpassung der Elementzahl und eventueller Sortierung der Elemente nach aufsteigendem initialen Abstand. Für diese Elemente können nun jeweils getrennt die Dominierungsintervalle bestimmt und die entsprechenden Ereignissequenzelemente in die resultierende Ereignissequenz eingefügt werden. Bei komplexeren Ereignissequenzen mit beispielsweise mehreren Rekursionsebenen wird vorgeschlagen, diese auf jeweils eine identische Struktur zu erweitern und diese über die Dominierungsregeln dann schrittweise miteinander zu vereinigen. Die vorne beispielhaft aufgeführten Ereignissequenzen $\Theta_3$ und $\Theta_4$ haben nach der Expansion folgende Gestalt: $\Theta_3 = \{(25, 0, 1, e), (25, 1, 1, e)\}$ und

$\Theta_4 = \{(24, 0, 1, e), (24, 12, 1, e)\}$. In Abbildung 5 werden die Dominierungsgrafen für diese beiden Ereignissequenzen dargestellt. Die resultierende Ereignissequenz kann folgendermaßen notiert werden: $\Theta_r = \{(\infty, 0, 50, \{(24, 0, 1, e)\}), (\infty, 0, 11, \{(25, 0, 1, e)\}), (\infty, 264, 39, \{(24, 12, 1, e)\}), (\infty, 1188, 50, \Theta_3)\}$.

Nach Vereinfachung hat der resultierende Ereignisstrom folgende Beschreibung: $\Theta_r = \{(\infty, 0, 22, \{(24, 0, 1, e), (25, 1, 1, e)\}), (\infty, 264, 78, \{(12, 0, 1, e)\}), (\infty, 1188, 100, \Theta_3)\}$

Es kann sein, dass ein Geradenabschnitt auf Grund der Begrenzung der Gesamtanzahl der Ereignisse abbricht. In diesem Fall dominiert danach eine der verbleibenden Geraden. Im Beispiel ist dies für alle Ereigniszahlen ab 100 Ereignissen der Fall. Im Abschnitt der ersten 100 Ereignisse dominieren bei den ungeraden Ereigniszahlen das erste Element von $\Theta_3$ und bei den geraden Ereigniszahlen das zweite Element von $\Theta_4$. Dort wechselt nach 11 Ereignissen die Dominierung auf das zweite Element von $\Theta_3$. Nach 100 Ereignissen dominieren nur noch die Elemente von $\Theta_3$.

Im Folgenden wird eine beispielhafte Ausführungsvariante für die Konkatenierungsoperation vorgestellt. Sie wird hauptsächlich benötigt, um die Innere-Ereignissequenz zu bestimmen. Bei der Ausführungsvariante für die Vereinigungsoperation wurden die Elemente der beteiligten Ereignissequenzen voneinander getrennt miteinander verglichen. Bei der Konkatenation werden die Elemente einer Ereignissequenz durch Elemente der jeweils anderen Ereignissequenz ergänzt. Dies führt zu mehr Kombinationsmöglichkeiten für die einzelnen Ereigniszahlen. Viele Ereigniszahlen können durch jedes Element der beteiligten Ereignissequenzen bei einer entsprechenden Ergänzung mit einem korrespondierenden Element der jeweils anderen Ereignissequenz erzeugt werden.

Beim Konkatenationsoperator enthält die resultierende Ereignissequenz nur Intervalle, die per Definition immer die Schnittstelle zwischen den Ereignissequenzen in möglichen Ergebnisintervallen enthalten. Die verschiedenen Kombinationen der Elemente führen zu unterschiedlichen Mindestereignisanzahlen. Für jede Kombination existiert ein initialer Abstand, der sich aus der Summe der initialen Abstände der beiden beteiligten Elemente ergibt. Die Kombinationen können maximal in zwei Richtungen periodisch fortgesetzt werden. Korrespondierend zur Vereinigungsoperation werden nur die Kombinationen miteinander verglichen, die auch bei ihrer Fortsetzung zu den gleichen Ereignisanzahlen führen. Daraus ergeben sich wieder mögliche Dominierungsabschnitte. Die Kombinationen werden in zwei Dimensionen, nämlich ihrem initialen Abstand und ihrer Periode miteinander verglichen. Kann eine Kombination in beide Richtungen periodisch fortgesetzt werden, so fließt sie zweimal in diesen Vergleich ein. Sind mehrere Kombinationen in beiden Werten identisch, kann eine beliebige ausgewählt werden. Für die resultierende Ereignissequenz sind solche Kombinationen nicht relevant, die in beiden Kriterien höchstens gleich gut oder schlechter als andere Kombinationen sind. Dabei ist eine Kombination mit einem kürzeren initialen Abstand besser als eine mit einem längeren, eine Kombination mit einer kürzeren Periode besser als eine mit einer längeren. Jede Kombination wird mit demjenigen Ereignissequenzelement fortgesetzt, welches die geringere Periode hat, da die initialen Abstände innerhalb einer Kombination immer gleich sind. Für die verbleibenden Kombinationen werden wieder, wie bei der Vereinigungsoperation, über die Geradengleichungen die Dominierungsabschnitte und Schnittpunkte bestimmt und daraus dann die resultierenden Ereignissequenzelemente mit ihren initialen Abständen und ihrer Begrenzung bestimmt. Besonderheit bei der Konkatenierungsoperation ist, dass wenn eine Begrenzung der Ereignisanzahl für ein Ereignissequenzelement erreicht ist, die Kombination durch das korrespondierende Ereignissequenzelement fortgesetzt werden kann, bis dessen Begrenzung ebenfalls erreicht ist. Zwischenkombinationen, bei denen von beiden Ereignissequenzelementen nur ein Teil ihrer maximal möglichen Ereignisse einfließen, sind hingegen nicht relevant. Kann eine Ereignissequenz beispielsweise maximal fünf Ereignisse und die mit ihr kombinierte Ereignissequenz maximal acht Ereignisse erzeugen, so werden für die Ereigniszahlen 2,3,4,5,6 nur Kombinationen der beiden Ereignissequenzen betrachtet, bei denen eines der beiden Sequenzen lediglich ein Ereignis erzeugt. Alle anderen Kombinationen, also beispielsweise eine Kombination, bei der eine Ereignissequenz zwei und eine Ereignissequenz drei Ereignisse erzeugt (Zwischenkombination) führen zu gleich großen oder größeren Intervallen und sind damit für die Bildung des Falls des maximalen Auftrittsmusters nicht relevant.

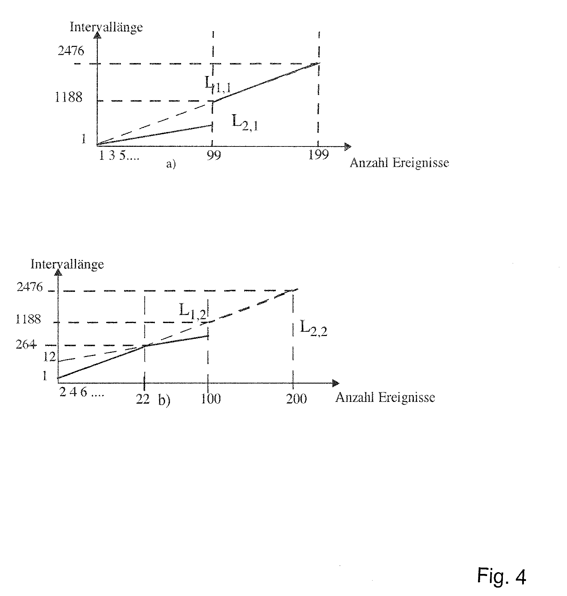

Die Fortsetzung lediglich in Richtung der kleinsten Periode führt zu kleineren Intervallen für die gleiche Ereignisanzahl, da der gleiche initiale Abstand eingeht. Die Operation wird im Folgenden anhand eines Beispiels erläutert, welches auch in Fig. 4 dargestellt ist:

$\Theta_1 = \{(\infty, 0, 200, \{(25, 0, 1, e), (25, 1, 1, e)\})$ und

$\Theta_2 = \{(\infty, 0, 100, \{(24, 7, 1, e), (24, 19, 1, e)\})$.

$\Theta_1$ stellt eine End-Ereignissequenz dar und $\Theta_2$ eine Start-Ereignissequenz. Sei $\omega_{1,1}$ das erste Ereignissequenzelement von $\Theta_1$, $\Theta_{1,2}$ das zweite Ereignissequenzelement von $\Theta_1$, $\omega_{2,1}$ das erste Ereignissequenzelement von $\Theta_2$ und $\omega_{2,2}$ das zweite Ereignissequenzelement von $\Theta_2$. Bei der Konkatenation der beiden Ereignissequenzen ergibt sich ein initialer Abstand für zwei Ereignisse, welcher durch die Summe der initialen Abstände beider Ereignissequenzen bestimmt wird. Dies ist bei jeder der beteiligten Ereignissequenzen der kleinste initiale Abstand aller ihrer Ereignissequenzelemente. Im vorliegenden Beispiel beträgt dieser Sieben und ergibt sich aus den Ereignissequenzelementen $\omega_{1,1}$ mit initialem Abstand Null und $\omega_{2,1}$ mit initialem Abstand Sieben. Sind die Ereignissequenzelemente sortiert, ergeben immer die jeweils ersten Elemente diesen Abstand von zwei Ereignissen.

Dieses Ergebnis führt zu den Ereignissequenzelementen $(\infty,0,1,e)$ und $(\infty,7,1,e)$ als aperiodischem Anfangsteil der resultierenden konkatenierten Ereignissequenz. Die Anzahl von 3,5,7,9... Ereignissen kann entweder durch eine Kombination der Ereignissequenzelemente $\omega_2$ und $\omega_{2,1}$ oder durch eine Kombination der Elemente $\omega_{1,1}$ und $\omega_{2,2}$ erzeugt werden. Da sich beide Kombinationen von jedem der jeweils zwei beteiligten Ereignissequenzelementen periodisch fortsetzten lassen, ergeben sich insgesamt vier Möglichkeiten 3,5,7,9,... Ereignisse zu erzeugen. Diese Möglichkeiten werden über die Parameter initialer Abstand und Periode miteinander verglichen und so die dominierenden Kombinationen bestimmt. Im vorliegenden Fall ist dies die Kombination aus den Ereignissequenzelementen $\omega_{1,2}$ und $\omega_{2,1}$, welche durch das Element $\omega_{2,1}$ periodisch fortgesetzt wird. Erst wenn dessen Begrenzung erreicht ist, wird die Kombination durch das andere Element fortgesetzt, bis dessen Begrenzung ebenfalls erreicht ist. Die Ereignisanzahlen 4,6,8,10,... werden entweder durch eine Kombination der Ereignissequenzelemente $\omega_{1,2}$ und $\omega_{2,2}$ oder durch eine Kombination der Elemente $\omega_{1,1}$ und $\omega_{2,1}$ erreicht. Bei der zweiten Kombination wird, um auf die entsprechende Anzahl von Ereignissen zu kommen, eine Periode in den initialen Abstand der Kombination mit einbezogen. Durch diese Einbeziehung einer Periode ist die entsprechende Begrenzung bei der weiteren Analyse um Eins zu reduzieren. Es ergeben sich also folgende mögliche Kombinationselemente (ohne Begrenzung): (25,20,1,e), (24,20,1,e), (25,25,1,e) und (24,24,1,e). Es dominiert zunächst die zweite Kombination. Es ergeben sich für die initial dominierenden Elemente die gleiche Periode 24 was eine Zusammenfassung dieser Elemente in ein hierarchisches Ereignissequenzelement erlaubt. Eine solche Zusammenfassung ist prinzipiell auch bei unterschiedlichen Perioden bis zu den Stellen möglich, an denen ein Element das andere "überholt", also sich die Reihenfolge, in welcher die Elemente Ereignisse erzeugen, ändert. Es ergeben sich also, ohne Berücksichtigung der Begrenzung für die resultierende Ereignissequenz die Ereignissequenzelemente (24,8,1,e) und (24,20,1,e). Diese können zu dem äquivalenten Element (12,8,1,e) zusammengefasst werden. Unter Einbeziehung der Begrenzung und der sich dann ergebenden Möglichkeit der periodischen Fortsetzung der Kombinationen durch das jeweils andere Teilelement und unter Berücksichtigung deren Begrenzung ergibt sich die Ereignissequenz $\{(\infty, 0, 1, e), (\infty, 7, 1, e), (\infty, 8, 98, qA), (\infty, 1220, 200, \Theta_B)\}$ mit den rekursiv eingebetteten Ereignissequenzen $\Theta_A = \{(12, 0, 1, e)\}$ und $\Theta_B = \{(25, 0, 1, e), (25, 1, 1, e)\}$ als Ergebnis. Wie in dem Beispiel zu sehen ist, ermöglicht die Ausführungsform der Konkatenierungsoperation die effiziente Bestimmung einer Ausgangsereignissequenz, deren resultierende Beschreibungskomplexität sich in Grenzen hält und damit effizient weiter bearbeitet werden kann.

Eine Möglichkeit der Behandlung von Schleifen ist sie auszurollen und dann den resultierenden Grafen mit der vorgestellten Methodik zu analysieren. Dabei ist es möglich, den Schleifenrumpf vorab als Teilgraf zu analysieren und auf seine Ereignissequenzen zu reduzieren. Diese werden bei der Analyse dann fortgesetzt miteinander konkateniert, wobei auch ein möglicher Abbruch der Schleife unterhalb der maximalen Anzahl an Iterationen beachtet werden sollte. Durch die regelmäßige Struktur kann die Schleifenanalyse aber auch durch Anwendung der vorgestellten Methoden mit geringerem Aufwand erfolgen, indem die Regelmäßigkeit der Struktur und der Auftrittsmuster von Ereignissen ausgenutzt wird.

Das Verfahren wurde für die Bestimmung maximaler Ereignissequenzen beschrieben. Es kann aber korrespondierend auch für die Bestimmung von minimalen oder durchschnittlichen Ereignissequenzen eingesetzt werden. Wird eine Task von mehreren Ereignissen aktiviert, so kann dies beispielsweise durch eine fortgesetzte Konkatenation des Kontrollflussgrafen der Task an sich selber modelliert werden. Dabei können Mindestseparationsabstände und Zeitschranken einbezogen bzw. eine die Task aufrufende Ereignissequenz in eine Schleifenkonstruktion übersetzt werden.

Diese Verfahren können mit einem Computerprogrammerzeugnis und einem Computer realisiert werden.

Bezugszeichenliste

| | |
|---|---|
| $\tau_n$ | Tasksystem |
| $\tau$ | Task |

| HES | hierarchische Ereignissequenz |
|---|---|
| $\Theta$ | hierarchische Ereignissequenz |
| $\Theta'$ | weitere hierarchische Ereignissequenz |
| $\tau'$ | weitere Task |
| I | Zeitintervall |
| $\omega$ | hierarchisches Ereignissequenzelement |
| p | Periode |
| a | initialer Abstand |
| n | Begrenzung |
| $\Theta'$ | rekursiv eingebettete hierarchische Ereignissequenz |

$\omega = (p, a, n, \Theta')$

**Patentansprüche**

1. Verfahren zur Analyse, insbesondere zur Echtzeitanalyse, eines Systems, insbesondere eines Computersystems, bei dem eine Menge unterschiedlicher Tasks ($\tau$) vorgesehen ist,
   wobei die Tasks ($\tau_n$) zumindest teilweise wiederholend vom System angefordert und abgearbeitet werden oder
   wiederholt Ereignisse durch Anforderungen an Teilkomponenten des Systems erzeugen,
   wobei mindestens eine Task bei ihrer Aktivierung mehrere Ereignisse erzeugt,
   wobei ein inneres Verhalten der Task durch einen Kontrollfluss beschreiben wird, welcher durch einen Kontrollflussgraf repräsentiert wird,
   wobei ein Schritt vorgesehen ist, bei dem aus den für mehrere zusammenhängende Teilgrafen oder Knoten des Kontrollflussgrafen ermittelten Auftrittsmustern der Ereignisse ein weiteres Auftrittsmuster für einen diese Teilgrafen und Knoten umfassenden weiteren Kontrollflussgrafen ermittelt wird
   und
   zu dieser Ermittlung teilweise mindestens ein zusätzliches Auftrittsmuster von Ereignissen der Teilgrafen herangezogen wird,
   und
   dieses zusätzliche Auftrittsmuster ein mögliches Auftrittsmuster von Ereignissen in zeitlicher Abhängigkeit von bestimmten Durchlaufpunkten der Teilgrafen repräsentiert,
   wobei bei einem verzweigten Kontrollfluss die Zweige getrennt schrittweise durchlaufen und anschließend mittels einer Vereinigungsoperation wieder vereinigt werden, derart, dass Strukturinformationen über den durchlaufenen Teilgrafen nicht mehr relevant sind.

2. Verfahren nach Anspruch 1, wobei aus der Vereinigungsoperation eine vereinigte Ereignissequenz gebildet wird, welche für alle Kostenintervalle die jeweils maximal erzeugbare Anzahl von Ereignissen der in die Vereinigungsoperation eingehenden Ereignissequenzen enthält.

3. Verfahren nach einem der vorhergehenden Ansprüche, bei dem eines der zusätzlich zu berücksichtigenden Auftrittsmuster von Ereignissen vom Durchlaufen eines Endknotens des Teilgrafen an zeitlich rückwärtsgewandt bestimmt wird.

4. Verfahren nach einem der vorhergehenden Ansprüche, bei dem eines der zusätzlich zu berücksichtigenden Auftrittsmuster von Ereignissen vom Durchlaufen eines Anfangsknotens des Teilgrafen bestimmt wird.

5. Verfahren nach einem der vorhergehenden Ansprüche, bei dem eines der zu berücksichtigenden Auftrittsmuster für jede mögliche Intervalllänge die maximal innerhalb des Teilgrafens in einem Intervall dieser Länge erzeugte Anzahl von Ereignissen repräsentiert.

6. Verfahren nach einem der vorhergehenden Ansprüche, bei dem eines der zu berücksichtigenden Auftrittsmuster für jede mögliche Intervalllänge die maximal innerhalb des Teilgrafens in einem Intervall dieser Länge erzeugte Anzahl von Ereignissen repräsentiert und sowohl der Durchlaufpunkt eines Startknotens als auch eines Endknotens innerhalb des Intervalls liegen.

7. Computerprogrammiererzeugnis zur Analyse des Zeitverhaltens von komplexen Systemen mit Programmcodemitteln zur Durchführung des Verfahrens nach einem der vorhergehenden Ansprüche.

Fig. 1

Fig. 2

Fig. 3

Fig. 4

Europäisches
Patentamt

European
Patent Office

Office européen
des brevets

**EUROPÄISCHER RECHERCHENBERICHT**

Nummer der Anmeldung

EP 10 19 6021

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | BARUAH S K: "A general model for recurring real-time tasks", REAL-TIME SYSTEMS SYMPOSIUM, 1998. PROCEEDINGS. THE 19TH IEEE MADRID, SPAIN 2-4 DEC. 1998, LOS ALAMITOS, CA, USA,IEEE COMPUT. SOC, US, 2. Dezember 1998 (1998-12-02), Seiten 114-122, XP010318753, ISBN: 0-8186-9212-X * das ganze Dokument * | 1-7 | INV. G06F17/50 G06F9/48 G06F11/36 |
| X,P | ALBERS K ET AL: "Hierarchical Event Streams and Event Dependency Graphs: A New Computational Model for Embedded Real-Time Systems", REAL-TIME SYSTEMS, 2006. 18TH EUROMICRO CONFERENCE ON DRESDEN, GERMANY 05-07 JULY 2006, PISCATAWAY, NJ, USA,IEEE, 5. Juli 2006 (2006-07-05), Seiten 97-106, XP010927454, ISBN: 0-7695-2619-5 * das ganze Dokument * | 1-7 | |
| X,P | FRANK BODMANN ET AL: "Analyzing the Timing Characteristics of Task Activations", INDUSTRIAL EMBEDDED SYSTEMS, 2006. IES '06. INTERNATIONAL SYMPOSIUM ON, IEEE, PI, 18. Oktober 2006 (2006-10-18), - 20. Oktober 2006 (2006-10-20), Seiten 1-8, XP031086712, ISBN: 0-7803-9759-2 * das ganze Dokument * -/-- | 1-7 | RECHERCHIERTE SACHGEBIETE (IPC) G06F G05B |

Der vorliegende Recherchenbericht wurde für alle Patentansprüche erstellt

| Recherchenort | Abschlußdatum der Recherche | Prüfer |
|---|---|---|
| Den Haag | 10. Februar 2011 | Salsa, Francesco |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

Europäisches
Patentamt

European
Patent Office

Office européen
des brevets

**EUROPÄISCHER RECHERCHENBERICHT**

Nummer der Anmeldung

EP 10 19 6021

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| | & DATABASE INSPEC [Online]<br>THE INSTITUTION OF ELECTRICAL ENGINEERS, STEVENAGE, GB;<br>2007,<br>BODMANN F ET AL: "Analyzing the timing characteristics of task activations",<br>Database accession no. 9518810<br>* Zusammenfassung *<br>----- | | |
| A | Narsingh Deo: "Graph theory with applications to engineering and computer science",<br>1974, Prentice Hall, US, XP002621842,<br>* Seite 98 - Seite 100; Abbildungen 5.6, 5.7 *<br>----- | 1,7 | |
| A,D | KAI RICHTER: "Compositional Scheduling Analysis Using Standard Event Models",<br>INTERNET CITATION, [Online]<br>25. November 2004 (2004-11-25),<br>XP007903601,<br>Gefunden im Internet:<br>URL:http://deposit.ddb.de/cgi-bin/dokserv?idn=976951754&dok_var=d1&dok_ext=pdf&filename=976951754.pdf><br>[gefunden am 2007-11-29]<br>* Seite 31 - Seite 74 *<br>----- | 1-7 | RECHERCHIERTE SACHGEBIETE (IPC) |
| A | KARYPIS G., KUMAR V.: "Parallel Multilevel k-way Partitioning Scheme forIrregular Graphs",<br>ACM, 2 PENN PLAZA, SUITE 701 - NEW YORK USA,<br>1996, XP040123592,<br>USA<br>* Absatz [0001] *<br>-----<br>-/-- | 1-7 | |

Der vorliegende Recherchenbericht wurde für alle Patentansprüche erstellt

| Recherchenort | Abschlußdatum der Recherche | Prüfer |
|---|---|---|
| Den Haag | 10. Februar 2011 | Salsa, Francesco |

Europäisches Patentamt
European Patent Office
Office européen des brevets

**EUROPÄISCHER RECHERCHENBERICHT**

Nummer der Anmeldung

EP 10 19 6021

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | GRESSER K: "MODELLIERUNG DES ZEITVERHALTENS EREIGNISDISKRETER SYSTEME ZUM NACHWEIS DER ECHTZEITFAHIGKEIT MODELLING TIME OF EVENT DRIVEN REAL-TIME SYSTEMS FOR THE SCHEDULABILITY ANALYSIS", AUTOMATISIERUNGSTECHNIK - AT, OLDENBOURG WISSENSCHAFTSVERLAG, MUNCHEN, DE, Bd. 43, Nr. 8, 1. August 1995 (1995-08-01), Seiten 368-373, XP000523263, ISSN: 0178-2312 * das ganze Dokument * ----- | 1-7 | |
| A,D | GRESSER K: "An Event Model for Deadline Verification of Hard Real-Time Systems", CONFERENCE PROCEEDINGS ARTICLE 5TH EUROMICRO WORKSHOP ON REAL TIME SYSTEMS, 22. Juni 1993 (1993-06-22), Seiten 118-123, XP010259068, * das ganze Dokument * ----- | 1-7 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| Den Haag | 10. Februar 2011 | Salsa, Francesco |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.............................................................................
& : Mitglied der gleichen Patentfamilie, übereinstimmendes Dokument

EPO FORM 1503 03.82 (P04C03)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **K. GRESSER.** Echtzeitnachweis Ereignisgesteuerter Realzeitsysteme. VDI Verlag, 1993, vol. 10
- **K. ALBERS ; F. SLOMKA.** An Event Stream Driven Approximation for the Analysis of Real-Time Systems. *IEEE Proceedings of the 16th Euromicro Conference on Real-Time Systems,* 2004, 187-195
- **K. ALBERS ; F. SLOMKA.** Efficient Feasibility Analysis for Real-Time Systems with EDF-Scheduling. *Proceedings of the Design Automation and Test Conference in Europa,* 2005, 492-497
- **S. CHAKRABORTY ; L. THIELE.** A New Task Model for Streaming Applications and its Schedulability Analysis. *IEEE Proceedings of the Design Automation and Test in Europe Conference (DATE'05,* 2005, 486-491
- **K. RICHTER.** Compositional Scheduling Analysis Using Standars Event Models. TU Braunschweig, 2005
- **KARSTEN ALBERS ; FRANK SLOMKA.** An Event Stream driven Approximation for the Analysis of Real-Time System. *IEEE Proceedings of the 16th Euromicro Conference on Real-Time Systems 2004 (ECRTS'04,* 2004, 187-195